# FASCICULE DE BREVET EUROPEEN

(11) **EP 1 020 312 B1**
(45) Date de publication et mention de la délivrance du brevet: **28.12.2005**
(21) Numéro de dépôt: 99870005.8
(22) Date de dépôt: 14.01.1999
(51) Int. Cl.: B60J 7/08, B60P 7/04

(54) **Dispositif de couverture de conteneur**
Vorrichtung zum Abdecken von Behältern
Cover system for container

(43) Date de publication de la demande: 19.07.2000
(73) Titulaire: DMC Handling Sprl, 1000 Bruxelles (BE)
(72) Inventeur: Close, Monique, 1000 Bruxelles (BE)
(74) Mandataire: Vandeberg, Marie-Paule L.G.

(56) Documents cités:
- EP-A- 0 244 563
- US-A- 5 002 328
- US-A- 5 423 598
- US-A- 5 743 700

## Description

L'invention concerne les dispositifs pour la couverture et le bâchage de conteneurs ouverts vers le haut.

L'usage de conteneurs ouverts vers le haut pour le transport de produits en vrac ainsi que de véhicules, transports spécialement adaptés à ce type de chargement, connaît un succès croissant.

L'avantage principal de conteneurs de ce type tient à la facilité de remplissage et au fait que le chargement de l'opération de transport sont dissociés, ce qui permet une rotation optimale du matériel de transport : les conteneurs sont remplis à la discrétion de l'usage, le véhicule n'étant mobilisé que lors de la livraison et de la reprise en charge d'un conteneur. Un timing précis permet donc à un seul véhicule adapté d'assurer la "rotation" permanente d'une multitude de conteneurs distincts.

Cette méthode débouche toutefois sur un problème non négligeable : le chargement n'est pas toujours assuré par de véritables professionnels et l'intervention du chauffeur du véhicule reste requis pour assurer la "sécurité" du transport de matériaux souvent très variés, parfois polluants.

Des règles de sécurité de plus en plus strictes exigent ainsi le bâchage ou l'extension d'une couverture protectrice sur le haut du conteneur. Outre le fait qu'elle prend du temps, cette opération n'est pas dépourvue de risques. Un nombre d'accidents de travail non négligeable se produisent au cours de cette manoeuvre routinière.

Divers dispositifs ont été mis au point pour remédier à ce problème. On connaît par EP-A-687585 un mécanisme à enroulement par lequel une bâche est déployée par un mécanisme de bras par-dessus un chargement. Un tel mécanisme a le désavantage d'être onéreux et surtout encombrant latéralement, ce qui restreint son utilisation à des conteneurs étroits ou, à l'inverse, à des camions hors-gabarit.

D'autres mécanismes proposent des bâches ou couvertures déroulables longitudinalement depuis l'axe central du véhicule, ce qui est également onéreux et peu pratique. On connaît par EP-A-0244563 un dispositif de bâchage suivant le préambule de la revendication 1.

L'objet de l'invention est un dispositif de couverture de conteneur de transport ouvert vers le haut qui comprend une bâche de longueur supérieure ou égale à la longueur axiale d'un conteneur et un tambour d'enroulement sensiblement cylindrique, de longueur correspondant à la largeur d'un conteneur ; un mécanisme débrayable est apte à entraîner ledit tambour en rotation axiale par rapport à un support, de manière telle que la bâche s'enroule circonférentiellement sur ledit tambour ; des moyens de fixation sont aptes à solidariser une des extrémités longitudinales de la bâche au tambour ; il comprend des moyens d'accrochage pour un organe de bâchage solidaires de l'autre extrémité longitudinale de la bâche.

Un premier avantage de l'invention est une augmentation de la sécurité du travail : contrairement au bâchage manuel, l'opérateur ne doit plus monter sur le conteneur ni enjamber le chargement.

Un autre avantage réside dans la simplicité du déploiement de la bâche et dans le gain de temps réalisé.

Un autre avantage est un respect accru des conditions d'hygiène et de propreté lors du transport.

Le mécanisme débrayable est entraîné par un moteur, de préférence, une turbine pneumatique couplée à un réducteur. Une telle turbine est très compacte, robuste et dispose d'un couple adéquat. Le mécanisme peut cependant être entraîné par un moteur électrique ou hydraulique.

Le mécanisme débrayable est logé à l'intérieur du tambour, ce qui permet de gagner en compacité et met le mécanisme à l'abri des heurts. Le couple d'enroulement assigné au tambour par le moteur est calculé de façon à maintenir une tension optimale sur la bâche, même lorsque la position du dispositif varie par rapport à celle du conteneur.

La bâche comprend avantageusement des pans latéraux fixés sur tout ou partie de ses extrémités transversales, lesdits pans latéraux étant aptes à être rabattus sur ladite bâche pour son enroulement et à être déployés sur les flancs du conteneur lorsque la bâche est déroulée. Ces pans latéraux permettant au chargement de répondre à des critères environnementaux encore plus sévères.

Le support du dispositif de couverture est, suivant un mode de réalisation, apte à être fixé à un véhicule destiné au transport de conteneur.

L'avantage réside dans le montage très simple du dispositif sur des conteneurs ou camions déjà en activité.

L'équipement représente un investissement très modeste, prend peu de place et peut, si nécessaire, être livré en "kits" que le client peut monter lui-même.

Le support peut notamment comprendre des moyens de fixation à un bras d'un crochet de halage de conteneur. Cette localisation est rendue possible par son faible encombrement et rend la manoeuvre particulièrement aisée.

Dans un autre mode de réalisation, le support est apte à être fixée à une des extrémités axiales d'un conteneur (le conteneur, dans ce cas, peut être une benne basculante).

Un autre objet de l'invention est un conteneur ouvert vers le haut qui comprend un dispositif de couverture comme décrit ci-dessus. Le mécanisme ne réclame en effet aucun entretien particulier.

L'invention a également pour objet un véhicule de transport de conteneur qui comprend un dispositif de couverture tel que décrit.

Un autre objet est enfin un dispositif de halage à crochet pour conteneur caractérisé en ce qu'il comprend un dispositif tel que décrit ci-dessus.

Un avantage est que le mécanisme est robuste et que l'on peut utiliser des bâches à longue durée de vie, telles que des bâches tissées (notamment avec tissage multifilaments) plutôt que des bâches en film PVC.

Les bâches tissées résistent mieux à la déchirure (par exemple, si le changement comporte des objets pointus ou tranchants), au frottement et restent souples à basses températures.

Légitimement, l'on hésite cependant à utiliser des matériaux d'une telle qualité pour une bâche à déploiement manuel, rapidement mise hors d'usage du fait de ses rudes conditions d'emploi.

D'autres particularités et avantages de l'invention ressortiront de la description ci-après de formes de réalisations particulières, référence étant faite aux dessins annexés dans lesquels :
la fig. 1 est une vue en plan du dispositif suivant l'invention;
la fig. 2 est une vue latérale du même dispositif;
la fig. 3 est une vue latérale d'un véhicule porte conteneur équipé du dispositif de bâchage, au moment du chargement d'un conteneur;
la fig. 4 est une vue latérale similaire à la Fig. 1, après extension de la bâche sur le conteneur;
la fig. 5 est une vue latérale d'un véhicule similaire, après chargement du conteneur;

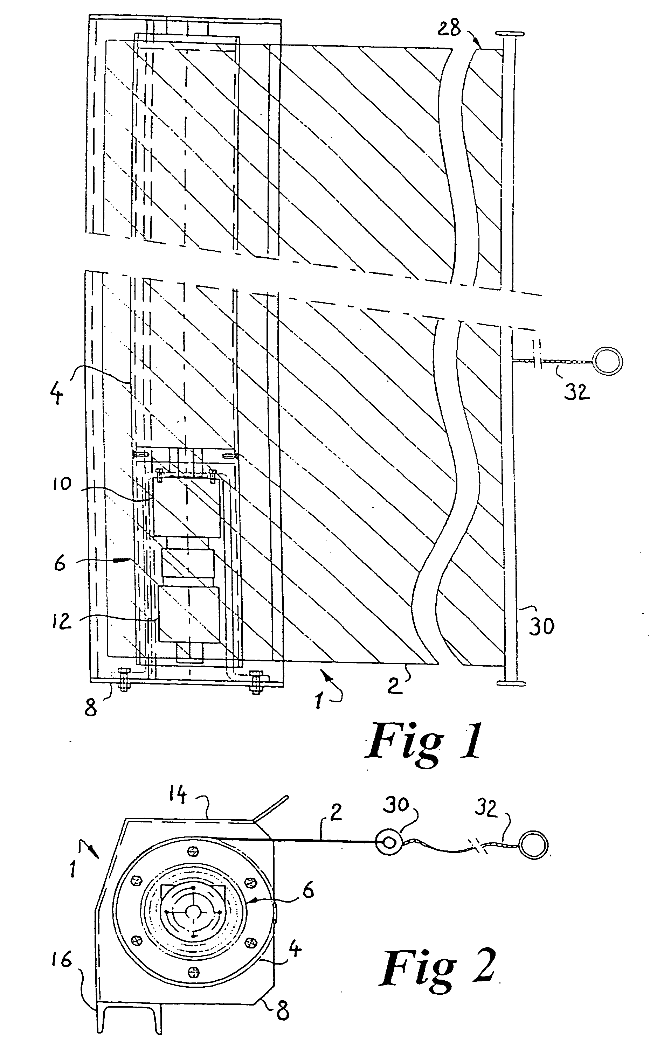

la fig. 1 est une vue avec arrachement partiel d'un dispositif 1 suivant l'invention.

Le dispositif 1 présente une allure générale cylindrique. Il comprend une bâche 2, représentée partiellement déroulée, qui, à l'état de repos, est enroulée sur un tambour cylindrique (4).

Ce tambour (4) a une longueur correspondant, grosso modo, à la largeur maximum d'un conteneur classique.

Un mécanisme d'entraînement 6, de diamètre suffisamment réduit pour prendre place axialement à l'intérieur même du tambour 4, est fixé par un accouplement élastique d'une part à un flasque latéral 8, d'autre part au tambour 4 lui-même.

Ce mécanisme 6 comprend un moteur 10 débrayable, ainsi qu'un petit réducteur de vitesse 12.

Le flasque 8 est relié à un cadre 14, en l'occurrence une tôle d'acier en U. Ce cadre 14 est muni d'un organe de fixation 16 permettant de monter le dispositif sur tout support approprié.

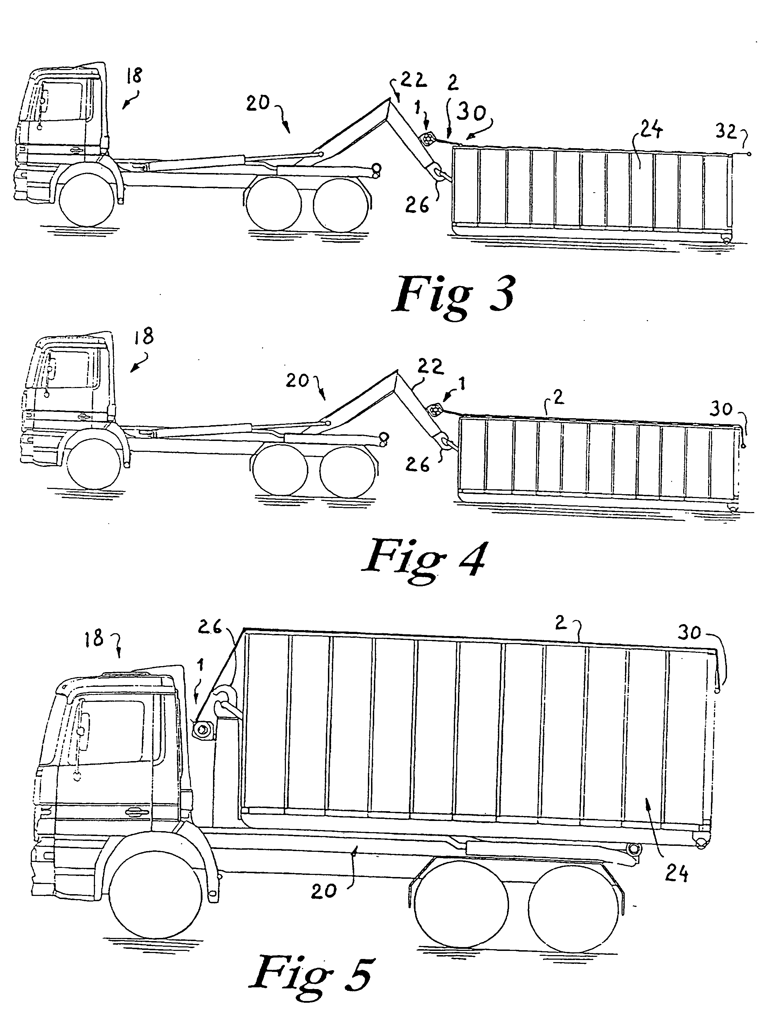

Ce mode de fonctionnement du dispositif et certains de ces avantages sont illustrés par les Figures 3 à 5.

La figure 3 montre un camion 18 muni d'un dispositif de halage et de transport de conteneur 20. Le bras 22 du dispositif 20 a été basculé vers l'arrière de façon à pouvoir saisir un conteneur 24 à l'aide d'un crochet 26.

Un dispositif de couverture 1 suivant l'invention est fixé transversalement sur le bras 22, en deçà du crochet 26.

L'extrémité distale 28 de la bâche 2 est munie d'une barre raidisseuse 30 à laquelle est fixé un organe de traction (en l'occurrence, un filin ou une garcette 32) se prolongeant à l'extérieur du cadre 14. Le bras 22 ayant été correctement mis en place, il suffit à l'opérateur de saisir ce filin 32 ou d'accrocher la garcette et d'aller se placer derrière le conteneur 24. Il peut s'aider d'une perche légère (non représentée). Le mécanisme d'entraînement 6 étant à ce moment débrayé, l'opérateur hâle vers lui l'extrémité de la bâche 2, qui se déroule aisément. Lorsque le conteneur et son chargement sont correctement recouverts par la bâche, l'opérateur fixe l'extrémité distale 28 de la bâche par un moyen de fixation approprié, tel qu'un taquet ou un crochet, au flanc arrière du conteneur 24.

Il embraye ensuite le mécanisme d'enroulement 6, ce qui a pour effet de mettre la bâche 2 sous tension (Fig. 4).

Il peut alors procéder au chargement du conteneur 24 couvert en actionnant le dispositif de halage 20 (Fig. 5).

Le bâchage étant simple et rapide, tant le conducteur que l'entreprise qui l'emploie n'ont plus de raison de négliger cette opération, négligence qui pourrait du reste leur valoir de sérieuses amendes.

On notera que le couple d'enroulement assigné au tambour 4 par le moteur 10 (via le réducteur 12) est calculé de façon à maintenir une tension optimale sur la bâche, même lorsque la position du dispositif 1 varie par rapport à celle du conteneur 24, comme c'est le cas lorsque le bras 22 bascule : la longueur de la partie déroulée de la bâche 2 s'ajuste donc automatiquement. Le véhicule est prêt à prendre la route avec son chargement couvert.

Lors du déchargement, il suffit au conducteur de larguer l'extrémité de la bâche 2, celle-ci étant réenroulée automatiquement par le mécanisme 6 sur le tambour 4.

Suivant les exigences relatives aux chargements et aux réglementations particulières de transport, la bâche 2 peut être munie de rabats latéraux (non représentés).

Au repos, ces rabats latéraux sont repliés contre la bâche 2 et enroulés avec celle-ci sur le tambour 4.

Comme on peut le remarquer à la Fig. 5, la section du dispositif 1 est extrêmement réduite, ce qui permet de le monter et de l'employer sans problème même sur des véhicules déjà en service. Ce faible encombrement tient notamment au diamètre restreint du tambour. On notera par ailleurs que l'intégration du mécanisme d'enroulement 6 à l'intérieur même du tambour 4 permet de donner à la bâche une largeur suffisante pour recouvrir tout les conteneurs de dimension standard sans augmenter le gabarit latéral du véhicule. Il va de soi, cependant, que si l'on désire travailler sur des conteneurs de largeur réduite ou si le gabarit n'a pas d'importance déterminante, le mécanisme 6 peut parfaitement être placé en bout d'arbre, à l'extérieur du tambour voire entraîner celui-ci via un renvoi d'angle. Le groupe moteur-réducteur utilisé est de préférence commandé pneumatiquement (l'alimentation se faisant à partir du véhicule tracteur) mais il va de soi que l'on peut utiliser un moteur électrique ou hydraulique; différents mécanismes de commande du moteur peuvent être utilisés : commande directe placée à l'arrière du véhicule ou commande à distance.

Bien que les Fig. 3 à 5 représentent le dispositif monté sur un dispositif de halage d'un véhicule, le dispositif peut bien sûr être fixé sur diverses structures du véhicule mais également à demeure sur les conteneurs eux-mêmes, qu'il s'agisse de bennes basculantes ou de modèles à chargement différé de différents modèles.

## Revendications

1. Dispositif de couverture de conteneur de transport ouvert vers le haut qui comprend
- une bâche (2) de longueur supérieure ou égale à la longueur axiale d'un conteneur (24)
- un tambour d'enroulement (4) sensiblement cylindrique, de longueur correspondant à la largeur d'un conteneur (24)
- un mécanisme (6) apte à entraîner ledit tambour (4) en rotation axiale par rapport à un support (8), de manière telle que la bâche (2) s'enroule circonférentiellement sur ledit tambour (4)
- des moyens de fixation aptes à solidariser une des extrémités longitudinales de la bâche (2) au tambour (4)
- des moyens d'accrochage pour un organe de halage solidaires de l'autre extrémité longitudinale de la bâche (2).
**caractérisé en ce que** le mécanisme d'enroulement (6) est entraîné par un moteur (10)débrayable couplé à un réducteur (12).
et est logé avec la dite turbine à l'intérieur du tambour (4), le couple d'enroulement assigné au tambour (4) par le moteur (10) étant calculé de façon à maintenir une tension optimale sur la bâche, en ajustant la longueur déroulée de la bâche (2).

2. Dispositif de couverture suivant la revendication 1 **caractérisé en ce que** le mécanisme d'enroulement(6) débrayable (6) est entraîné par une turbine (10) couplée à un réducteur (12).

3. Dispositif de couverture suivant l'une quelconque des revendications précédentes **caractérisé en ce que** la bâche comprend des pans latéraux fixés sur tout ou partie de ses extrémités transversales, lesdits pans latéraux étant aptes à être rabattus sur ladite bâche pour son enroulement et à être déployés sur les flancs d'un conteneur (24) lorsque la bâche (2) est déroulée.

4. Dispositif de couverture suivant l'une quelconque des revendications précédentes **caractérisé en ce que** le support est apte à être fixé de façon permanente sur un véhicule (18) destiné au transport de conteneur.

5. Dispositif de couverture suivant la revendication 4 **caractérisé en ce que** le support comprend des moyens de fixation (16) à un bras (22) d'un crochet de halage de conteneur.

6. Dispositif de couverture suivant l'une quelconque des revendications 1 à 4 **caractérisé en ce que** le support est apte à être fixée de façon permanente à une des extrémités axiales d'un conteneur (24).

7. Conteneur (24) ouvert vers le haut **caractérisé en ce qu'**il comprend un dispositif de couverture (1) suivant l'une quelconque des revendications 1 à 4**.**

8. Véhicule (18) de transport de conteneur **caractérisé en ce qu'**il comprend un dispositif de couverture (1) suivant l'une quelconque des revendications 1 à 5**.**

9. Dispositif de halage à crochet (20) pour conteneur (24) avec un bras de halage (22) **caractérisé en ce qu'**il comprend un dispositif de couverture de conteneur de transport suivant la revendication 6 monté sur le bras de halage (22).

## Patentansprüche

1. Vorrichtung zur Abdeckung von nach oben offenem Transportcontainer, die umfasst
- eine Plane (2) von einer Länge, welche länger als die axiale Länge des Containers (24) ist oder ihr entspricht,
- eine im Wesentlichen zylinderförmige Trommel zum Aufrollen (4) von einer Länge, welche der Breite eines Containers (24) entspricht,
- ein Mechanismus (6), der die Trommel (4) dergestalt in axiale Drehung im Verhältnis zu einer Stütze (8) versetzen kann, dass die Plane (2) dem Umfang nach auf die Trommel (4) aufgerollt wird,
- Befestigungsmittel, mit welchen eines der längsseitigen Enden der Plane (2) fest an der Trommel (4) befestigt werden kann,
- Mittel zum Verhaken für ein Zugelement, die fest an dem anderen längsseitigen Ende der Plane (2) befestigt sind,
**dadurch gekennzeichnet, dass** der Mechanismus zum Aufrollen (6) von einem ausrückbaren Motor (10) angetrieben wird, der mit einem Reduktionsgetriebe (12) verbunden ist, und mit der Turbine im Inneren der Trommel (4) gelagert ist, wobei das Aufrolldrehmoment, das der Trommel (4) durch den Motor (10) verliehen wird, dergestalt berechnet ist, dass eine optimale Spannung über die Plane aufrechterhalten wird, indem die ausgerollte Länge der Plane (2) angepasst wird.

2. Vorrichtung zur Abdeckung nach Anspruch 1, **dadurch gekennzeichnet, dass** der ausrückbare (6) Mechanismus zum Aufrollen (6) durch eine Turbine (10) angetrieben wird, die mit einem Reduktionsgetriebe (12) verbunden ist.

3. Vorrichtung zur Abdeckung nach einem der vorhergehenden Ansprüche, **dadurch gekennzeichnet, dass** die Plane Seitenflächen umfasst, die an den gesamten quer liegenden Enden oder an einem Teil davon befestigt sind, wobei die Seitenflächen auf die Plane zu deren Aufrollen umgeschlagen werden können, und über die Seiten eines Containers (24) ausgebreitet werden können, wenn die Plane (2) ausgerollt wird.

4. Vorrichtung zur Abdeckung nach einem der vorhergehenden Ansprüche, **dadurch gekennzeichnet, dass** die Stütze dauerhaft an einem Fahrzeug (18), das für den Containertransport bestimmt ist, befestigt werden kann.

5. Vorrichtung zur Abdeckung nach Anspruch 4, **dadurch gekennzeichnet, dass** die Stütze an einem Arm (22) Befestigungsmittel (16) für einen Zughaken eines Containers umfasst.

6. Vorrichtung zur Abdeckung nach einem der Ansprüche 1 bis 4, **dadurch gekennzeichnet, dass** die Stütze dauerhaft an einem der axialen Enden eines Containers (24) befestigt werden kann.

7. Container (24), der nach oben offen ist, **dadurch gekennzeichnet, dass** er eine Vorrichtung zur Abdeckung (1) nach einem der Ansprüche 1 bis 4, umfasst.

8. Fahrzeug (18) für den Containertransport, **dadurch gekennzeichnet, dass** es eine Vorrichtung zur Abdeckung (1) nach einem der Ansprüche 1 bis 5 umfasst.

9. Zugvorrichtung mit Haken (20) für einen Container (24) mit einem Zugarm (22), **dadurch gekennzeichnet, dass** sie eine Vorrichtung zur Abdeckung eines Transportcontainers nach Anspruch 6 umfasst, die an dem Zugarm (22) angebracht ist.

## Claims

1. Cover system for open-top transport container that comprises
- a cover sheet (2) of length greater than or equal to the axial length of a container (24)
- an approximately cylindrical rolling-up drum (4) of length corresponding to the width of a container (24)
- a mechanism (6) capable of rotating the said drum (4) axially relative to a support (8), in such a way that the cover sheet (2) is rolled up circumferentially onto the said drum (4)
- fixing means capable of fixing one of the longitudinal ends of the cover sheet (2) to the drum (4) and
- fixed to the other longitudinal end of the cover sheet (2), securing means for a pulling member,
which system is **characterized in that** the rolling-up mechanism (6) is driven by a disengageable motor (10) coupled to a speed reduction mechanism (12) and is housed with the said turbine inside the drum (4), the rolling-up torque delivered to the drum (4) by the motor (10) being calculated to maintain an optimal tension on the cover sheet and adjust the unrolled length of the cover sheet (2).

2. Cover system according to Claim 1, **characterized in that** the disengageable rolling-up mechanism (6) is driven by a turbine (10) coupled to a speed reduction mechanism (12).

3. Cover system according to either of the preceding claims, **characterized in that** the cover sheet comprises side flaps fixed to all or part of its transverse ends, the said side flaps being capable of being folded back onto the said cover sheet for rolling up, and of hanging down over the sides of a container (24) when the cover sheet (2) is unrolled.

4. Cover system according to any one of the preceding claims, **characterized in that** the support is capable of being mounted permanently on a vehicle (18) intended for transporting containers.

5. Cover system according to Claim 4, **characterized in that** the support comprises means (16) for mounting it on a container-pulling hook arm (22).

6. Cover system according to any one of Claims 1 to 4, **characterized in that** the support is capable of being mounted permanently on one of the axial ends of a container (24).

7. Open-top container (24), **characterized in that** it comprises a cover system (1) according to any one of Claims 1 to 4.

8. Container transport vehicle (18), **characterized in that** it comprises a cover system (1) according to any one of Claims 1 to 5.

9. Hooked pulling system (20) for a container (24), with a pulling arm (22), **characterized in that** it comprises a cover system for a transport container according to Claim 6 mounted on the pulling arm (22).
